# EUROPEAN PATENT SPECIFICATION

(11) **EP 2 151 912 B1**
(45) Date of publication and mention of the grant of the patent: **27.04.2011**
(21) Application number: 09167327.7
(22) Date of filing: 06.08.2009
(51) Int. Cl.: H02M 3/155

(54) **DC-DC converter and organic light emitting display device using the same**
DC/DC-Wandler und organische Leuchtanzeigevorrichtung, die diesen einsetzt
Convertisseur CC-CC et dispositif d'affichage électroluminescent organique l'utilisant

(30) Priority: 06.08.2008 KR 20080076939
(43) Date of publication of application: 10.02.2010
(73) Proprietor: Samsung Mobile Display Co., Ltd., Yongin-city, Gyunggi-do 446-711 (KR)
(72) Inventor: Park, Sung-Cheon, Chungcheongnam-do (KR)
(74) Representative: Gulde Hengelhaupt Ziebig & Schneider

(56) References cited:
- EP-A- 1 951 005
- US-A- 4 736 151
- US-A- 5 412 308
- US-A1- 2005 213 354

## Description

### BACKGROUND OF THE INVENTION

### 1. Field of the Invention

The present invention relates to a DC-DC converter and an organic light emitting display device using the same as disclosed in EP 1951005, and more particularly to a high efficiency DC-DC converter and an organic light emitting display device using the same.

### 2. Description of Related Art

Recently, various flat panel displays having less weight and volume than cathode ray tubes (CRTs) have been developed. Some examples of flat panel displays include liquid crystal displays, field emission displays, plasma display panels, and organic light emitting displays, to name but a few.

Among others, organic light emitting displays display images using organic light emitting diodes (OLEDs) that generate light by a recombination of electrons and holes generated corresponding to the flow of an electric current.

Because organic light emitting displays have various advantages, such as excellent color reproducibility, thin profile, etc., their market has expanded into a variety of applications, e.g., portable digital assistants (PDAs), MP3 players, or the like, in addition to cellular phones.

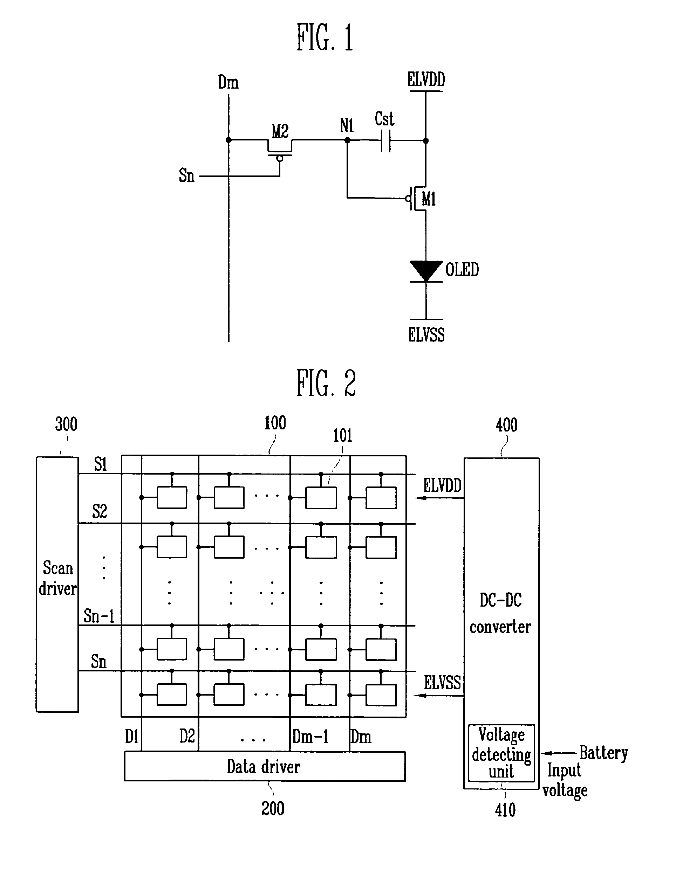

FIG. 1 is a circuit diagram illustrating a pixel circuit of a conventional organic light emitting display device. The organic light emitting display device of FIG. 1 may be applied to embodiments of the present invention. Referring to FIG. 1, the pixel is coupled to a data line Dm and a scan line Sn, and includes a first transistor M1 for driving the organic light emitting diode, a second transistor M2 for switching a data signal, a capacitor Cst for storing the data signal, and an organic light emitting diode OLED.

A source of the first transistor M1 is coupled to a first power supply ELVDD, a drain thereof is coupled to an anode electrode of the organic light emitting diode OLED, and a gate thereof is coupled to a first node N1. A source of the second transistor M2 is coupled to the data line Dm, a drain thereof is coupled to the first node N1, and a gate thereof is coupled to the scan line Sn. A first electrode of the capacitor Cst is coupled to the first power supply ELVDD, and a second electrode thereof is coupled to the first node N1. An anode electrode of the organic light emitting diode OLED is coupled to the drain of the first transistor M1 and a cathode electrode thereof is coupled to a second power supply ELVSS.

In the pixel, the voltage of the fist node N1 corresponds to the data signal transmitted through the data line Dm, and the first transistor M1 drives a current from the first power supply ELVDD to the second power supply ELVSS according to the voltage of the first node N1. With this operation, the organic light emitting diode OLED emits light. There are many alternatives to the pixel circuit of Fig. 1, most of which share many similarities with the pixel circuit of Fig. 1 such that one specific pixel circuit may be substituted by another without rendering the above considerations invalid.

The first power ELVDD and the second power ELVSS transmitted to the pixel are typically generated by a booster circuit and an inverter circuit, respectively, wherein the booster circuit and the inverter circuit have properties that they decrease in efficiency with an increasing difference between input voltage and output voltage. By way of example, as it requires more power to generate 4.6V from a 2.9V input, than to generate 4.6V from a 4.2V input, operational efficiency is deteriorated. Therefore, if an input voltage from a battery falls below a predetermined value, the booster circuit and the inverter circuit may stop operations due to the decrease in efficiency, causing a problem in that the time of use of the battery is shortened.

### SUMMARY OF THE INVENTION

Accordingly a first aspect of the invention provides an organic display device comprising a DC-DC converter as set forth in claim 1. Preferred embodiments are subject of the dependent claims.

### BRIEF DESCRIPTION OF THE DRAWINGS

The accompanying drawings together with the specification illustrate exemplary embodiments of the present invention, and, together with the description, serve to explain the principles of the present invention.

FIG. 1 is a schematic circuit diagram illustrating a circuit adapted for a conventional organic light emitting display device;

FIG. 2 is a block diagram of an organic light emitting display device according to an exemplary embodiment of the present invention;

FIG. 3 is a block diagram illustrating a DC-DC converter according to an exemplary embodiment of the present invention; and

FIG. 4 is a circuit diagram illustrating an example of the DC-DC converter of FIG. 3.

### DETAILED DESCRIPTION

Hereinafter, certain exemplary embodiments according to the present invention will be described with reference to the accompanying drawings. Herein, when a first element is described as being coupled to a second element, the first element may be directly coupled to the second element, or may be indirectly coupled to the second element via a third element. Further, some of the elements that are not essential to a complete understanding of the invention are omitted for clarity. Also, like reference numerals refer to like element throughout.

FIG. 2 is a block diagram of an organic light emitting display device according to an exemplary embodiment of the present invention. Referring to FIG. 2, the organic light emitting display device includes a display unit 100, a data driver 200, a scan driver 300, and a DC-DC converter 400.

The display unit 100 includes a plurality of pixels 101, each of which includes an organic light emitting diode (OLED, not shown) adapted to emit light corresponding to a flow of current through the OLED. Also, the display unit 100 is formed with n scan lines (S1, S2, ..., Sn-1, and Sn) extending in a row direction for sending scan signals, and m data lines (D1, D2, ..., Dm-1, and Dm) extending in a column direction for sending data signals.

The display unit 100 receives and is driven by the first power ELVDD and the second power ELVSS. Therefore, the display unit 100 emits light by causing a current to flow through the organic light emitting diodes in response to the scan signals, the data signals, the first power ELVDD, and the second power ELVSS, thereby displaying an image.

The data driver 200 generates data signals using image signals R, G, and B data having red, blue, and green components, respectively. The data driver 200 is coupled to the data lines D1, D2, ..., Dm-1, and Dm to apply the data signals to the display unit 100.

The scan driver 300, which generates the scan signals, is coupled to the scan lines S1, S2, ..., Sn-1, and Sn to send the scan signals to a specific row of the display unit 100. A pixel 101 selected with the scan signal receives a voltage corresponding to the data signal transmitted from the data driver 200.

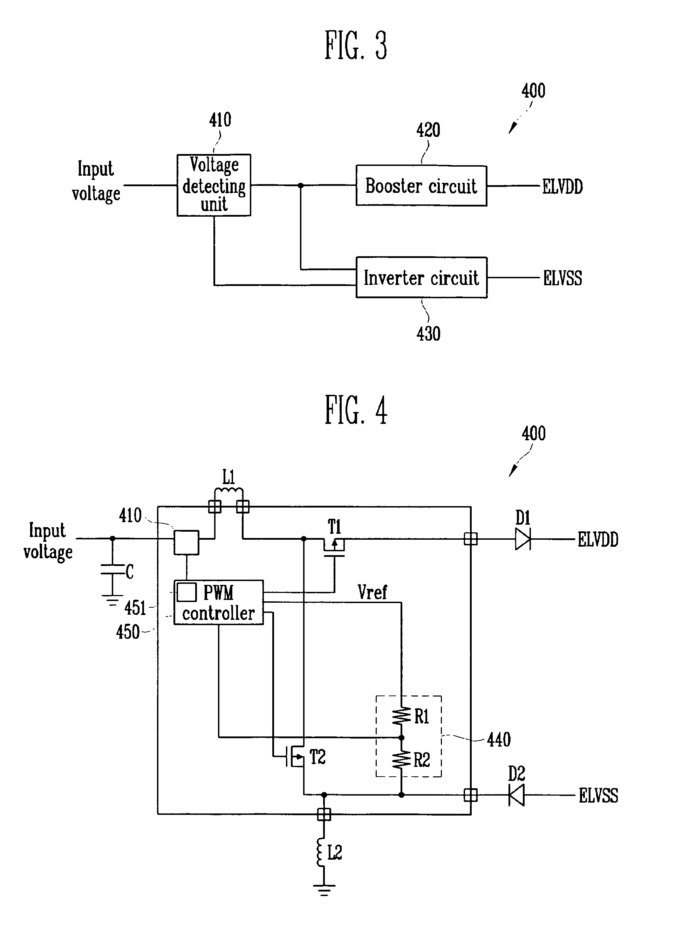

The DC-DC converter 400 receives an input current and an input voltage from the battery, and generates first power ELVDD and second power ELVSS. As illustrated in FIG. 3, the DC-DC converter 400 includes a booster circuit (or booster) 420 and an inverter circuit (or inverter) 430, wherein the booster circuit 420 boosts the input voltage to generate the first power ELVDD, and the inverter circuit 430 inverts the input voltage to generate the second power ELVSS. The booster circuit 420 and the inverter circuit 430 generally have better efficiency when a difference between their input voltage and their output voltage is small. In general, the input voltage from the battery gradually lowers as time elapses. That is, as the current from the battery is output during use of the battery, the input voltage of the booster circuit 420 and the inverter circuit 430 lowers. Therefore, as the input voltage is lowered, the booster circuit 420 and the inverter circuit 430 tend to deteriorate in efficiency.

In order to address this issue, the DC-DC converter 400 further includes a voltage detecting unit 410 for sensing an electric potential of the input voltage. The voltage detecting unit 410 senses the input voltage and the DC-DC converter 400 controls the voltage of at least the second power supply ELVSS corresponding to the sensed voltage level. In other words, the output voltage of the inverter circuit 430 is controlled in accordance with the input voltage of the inverter circuit 430, such that the efficiency of the DC-DC converter 400 improves.

The voltage of the second power supply ELVSS enables the organic light emitting diodes to be driven in a saturation region, wherein the conditions to drive the organic light emitting diodes in the saturation region may change according to the materials in the organic film of the organic light emitting diode and properties of the driving transistor (e.g., the first transistor M1 in FIG. 1). Therefore, when designing an organic light emitting display device, the voltage of the second power supply ELVSS generally has a margin of about 2 to 3V, so that the desired image can be sufficiently displayed even under unfavorable conditions. When designing the organic light emitting display device, if the voltage of the second power supply ELVSS is fixed, an absolute value of the voltage of the second power supply ELVSS is designed to be large. If the absolute value of the voltage of the second power supply ELVSS is designed to be large (for example, -5.4V) as described above, the input voltage of the battery should be set to be large. However, if the absolute value of the voltage of the second power supply ELVSS is designed to be small (for example, -3.4V), the input voltage of the battery is set to be low, enabling a reduction in consumption of the power from the battery. Therefore, after setting the input voltage to be low, if the voltage of the second power supply ELVSS is controlled as time elapses, the efficiency of the DC-DC converter 400 improves.

FIG. 3 is a block diagram showing a DC-DC converter according to an exemplary embodiment of the present invention. Referring to FIG. 3, the DC-DC converter 400 includes a voltage detecting unit (or voltage detector) 410, a booster circuit (or booster) 420, and an inverter circuit (or inverter) 430.

The voltage detecting unit 410 receives and measures an input voltage from a battery. The booster circuit 420 boosts the input voltage from the battery to generate the first power ELVDD. The inverter circuit 430 inverts the input voltage from the battery to generate the second power ELVSS. The inverter circuit 430 also controls the voltage of the second power ELVSS in accordance with the input voltage detected by the voltage detecting unit 410. In other words, when the measured input voltage is high, the inverter circuit 430 increases an absolute value of the voltage of the second power ELVSS, and when the measured input voltage is low, the inverter circuit 430 reduces an absolute value of the voltage of the second power ELVSS.

FIG. 4 is a circuit diagram illustrating an exemplary embodiment of the DC-DC converter 400 of FIG. 3. One skilled in the art will comprehend that different components may be used to generate output voltages, such as a switch-mode converter, a buck converter, a boost converter, a buck-boost converter, or any other suitable configuration known to those skilled in the art. Referring to FIG. 4, the DC-DC converter 400 includes a capacitor C for charging an input current, and to be charged with a voltage (e.g., a predetermined voltage), a voltage detecting unit 410 for determining the input voltage, a first coil L1 for generating the first power ELVDD according to an increase or a decrease in the input voltage to boost the input voltage , a first switching device (or switch) T1 enabling the input current to be transmitted to or blocked from the first coil L1 so that the first coil L1 generates the first power ELVDD, a second switching device (or switch) T2 coupled to the first switching device T1 for sending or blocking the flow of the input current transmitted through the first coil L1, a second coil L2 coupled to the second switching device T2 for generating the second power ELVSS by sending or blocking the input current transmitted through the second switching device T2, a Vref varying circuit 440 for varying a reference voltage Vref, first and second resistors R1 and R2 coupled between the Vref varying circuit 440 and the second coil L2 for dividing a voltage between the reference voltage Vref and the second power ELVSS, and a pulse width modulation (PWM) controller 450 for controlling switching operations of the first and second switching devices T1 and T2. The PWM controller 450 is further coupled between the first resistor R1 and second resistor R2 to undergo feedback of the divided voltage, thereby enabling control of the switching of the switching devices T1 and T2 in accordance with the divided voltage between the reference voltage Vref and the second power ELVSS.

The Vref varying circuit 440 receives a voltage (e.g., a predetermined voltage) Vref to vary the voltage thereof. By way of example, there is a method for varying a voltage through a voltage division.

The PWM controller 450 includes a lookup table 451 in which a voltage correction range of the reference voltage Vref is stored, corresponding to the voltage of the input current, an example of which is shown in Table 1 below. By utilizing this lookup table, when the voltage of the input current sensed by the voltage detecting unit 410 is measured, the PWM controller 450 corrects the reference voltage Vref using the lookup table. Therefore, the voltage of the second power supply ELVSS is controlled in correspondence to the corrected reference voltage Vref. One skilled in the art will comprehend that the values in this particular lookup table 451 are not limiting, and are only intended as an example. Other suitable values may be stored in the lookup table 451.

**Table 1**

| | Vin (Measured Values) | Vref | ELVSS |
|---|---|---|---|
| 1 | 4.2<Vin<=4.5V | Vref+1 | -5.5V |
| 2 | 2.9<Vin<=4.2V | Vref | -5.1 V |
| 3 | 2.7<Vin<=2.9V | Vref-1 | -4.6V |
| 4 | 2.5<Vin<=2.7V | Vref-2 | -4.1 V |
| 5 | 2.3<Vin<=2.5V | Vref-3 | -3.6V |
| 6 | 2.1 <Vin<=2.3V | Vref-4 | -3.1 V |

## Claims

1. An organic light emitting display device comprising:
a display unit (100) adapted to display an image corresponding to a data signal, a scan signal, a first power supply voltage (ELVDD) and a second power supply voltage (ELVSS);
a data driver (200) adapted to generate and output the data signal to the display unit (100);
a scan driver (300) adapted to generate and output the scan signal to the display unit (100),
and
a DC-DC converter (400) adapted to generate the first power supply voltage (ELVDD) and the second power supply voltage (ELVSS)
from an input voltage present at an input voltage terminal, the DC-DC converter (400) comprising:
a booster (420) adapted to boost the input voltage to generate the first power supply voltage; and
an inverter (430) adapted to invert the input voltage to generate the second power supply voltage (ELVSS) **characterised in that** the DC-DC converter (400) further comprises a voltage detector (410) adapted to detect a voltage level of the input voltage, and **in that** the inverter (430) is adapted to control a voltage level of the second power supply voltage (ELVSS) in accordance with the voltage level of the input voltage detected by the voltage detector (410), wherein the inverter (430) is adapted to increase the voltage level of the second power supply voltage (ELVSS) when the voltage level of the input voltage decreases.

2. The organic light emitting display device as claimed in claim 1, wherein the booster (420) comprises:
a first coil (L1) having a first terminal coupled to an input terminal for the input voltage; and
a first switch (T1) connected between a second terminal of the first coil (L1) and an output terminal for the first power supply voltage (ELVDD) and adapted to perform a switching operation to enable the input voltage to drive or block a current through the first coil (L1) so that the first power supply voltage (ELVDD) is generated in the first coil (L1).

3. The organic light emitting display device as claimed in claim 2, wherein the inverter (430) comprises:
a second switch (T2) connected between the second terminal of the first coil (L1) and
a second coil (L2), the second switch (T2) being adapted to transmit or block the first power supply voltage (ELVDD), and
a voltage divider(440) comprising first and second resistors (R1, R2) anda adapted to divide a voltage between a reference voltage and a voltage generated by the second coil (L2).

4. The organic light emitting display device as claimed in claim 3, further comprising:
a pulse width modulation (PWM) controller coupled to the first switch (T1) and the second switch (T2) and adapted to control the switching of the first switch (T1) and second switch (T2).

5. The organic light emitting display device as claimed in claim 4, wherein the PWM controller has an input for a feedback voltage coupled between the first and second resistors (R1,R2) is adapted to control a pulse width of an output signal of the PWM controller in accordance with the feedback voltage.

6. The organic light emitting display device as claimed in one of the claims 4 or 5, wherein the PWM controller further comprises a lookup table for storing variation values of the reference voltage in accordance with the input voltage.

7. The organic light emitting display device as claimed in one of the preceding claims, wherein the input voltage terminal is connected to a battery.

8. The organic light emitting display device as claimed in one of the preceding claims, wherein the inverter (430) comprises a switch-mode circuit.

9. The organic light emitting display device as claimed in one of the preceding claims, wherein the second power supply voltage (ELVSS) is lower than a ground voltage.

## Patentansprüche

1. Eine organische Leuchtanzeigevorrichtung, umfassend:
eine Anzeigeeinheit (100), die zum Anzeigen eines Bildes entsprechend einem Datensignal, einem Abtastsignal, einer ersten Stromversorgungsspannung (ELVDD) und einer zweiten Stromversorgungsspannung (ELVSS) ausgebildet ist;
einen Datentreiber (200), der zum Erzeugen und Ausgeben des Datensignals an die Anzeigeeinheit (100) ausgebildet ist;
einen Abtasttreiber (300), der zum Erzeugen und Ausgeben des Abtastsignals an die Anzeigeeinheit (100) ausgebildet ist; und
einen DC/DC-Umsetzer (400), der zum Erzeugen der ersten Stromversorgungsspannung (ELVDD) und der zweiten Stromversorgungsspannung (ELVSS) aus einer an einer Eingangsspannungsterminal anliegenden Eingangsspannung ausgebildet ist, wobei der DC/DC-Umsetzer (400) umfasst:
einen Booster (420), der zum Boosten der Eingangsspannung zur Erzeugung der ersten Stromversorgungsspannung ausgebildet ist; und
einen Inverter (430), der zum Umkehren der Eingangsspannung zur Erzeugung der zweiten Stromversorgungsspannung (ELVSS) ausgebildet ist,
**dadurch gekennzeichnet, dass**
der DC/DC-Umsetzer (400) weiterhin einen Spannungsdetektor (410) umfasst, der zum Detektieren eines Spannungspegels der Eingangsspannung ausgebildet ist, und dass der Wechselrichter (430) zum Steuern eines Spannungspegels der zweiten Stromversorgungsspannung (ELVSS) gemäß dem Spannungspegel der durch den Spannungsdetektor (410) erfassten Eingangsspannung ausgebildet ist, wobei der Wechselrichter (430) zum Erhöhen des Spannungspegels der zweiten Stromversorgungsspannung (ELVSS) ausgebildet ist, wenn der Spannungspegel der Eingangsspannung abnimmt.

2. Die organische Leuchtanzeigevorrichtung nach Anspruch 1, wobei der Spannungsverstärker (420) umfasst:
eine erste Spule (L1) mit einer ersten an eine Eingangsterminal die Eingangsspannung gekoppelten Anschlussterminal; und
einen ersten Schalter (T1), der zwischen einer zweiten Anschlussterminal der ersten Spule (L1) und einer Ausgangsterminal für die erste Stromversorgungsspannung (ELVDD) geschaltet ist und zum Ausführen eines Schaltvorgangs zur Freigabe der Eingangsspannung ausgebildet ist, um einen Strom durch die erste Spule (L1) zu steuern oder zu blockieren, so dass die erste Stromversorgungsspannung (ELVDD) in der ersten Spule (L1) erzeugt wird.

3. Organische Leuchtanzeigevorrichtung nach Anspruch 2, wobei der Wechselrichter (430) umfasst:
einen zweiten Schalter (T2), der zwischen der zweiten Anschlussterminal der ersten Spule (L1) und einer zweiten Spule (L2) geschaltet ist, wobei der zweite Schalter (T2) zum Übertragen oder Blockieren der ersten Stromversorgungsspannung (ELVDD) ausgebildet ist, und
einen Spannungsteiler (440), der erste und zweite Widerstände (R1, R2) umfasst und
zum Teilen einer Spannung zwischen einer Referenzspannung und einer durch die zweite Spule (L2) erzeugten Spannung ausgebildet ist.

4. Organische Leuchtanzeigevorrichtung nach Anspruch 3, weiterhin umfassend:
einen Pulse-Width-Modulation-(PWM)-Controller, die an den ersten Schalter (T1) und den zweiten Schalter (T2) gekoppelt ist und zum Steuern des Schaltens des ersten Schalters (T1) und des zweiten Schalters (T2) ausgebildet ist.

5. Organische Leuchtanzeigevorrichtung nach Anspruch 4, wobei die PBM-Steuerung einen Eingang für eine Rückkopplungsspannung, der zwischen den ersten und zweiten Widerstand (R1, R2) geschaltet ist, aufweist und zum Steuern einer Pulsbreite eines Ausgangssignals der PBM-Steuerung gemäß der Rückkopplungsspannung ausgebildet ist.

6. Organische Leuchtanzeigevorrichtung nach einem der Ansprüche 4 oder 5, wobei die PBM-Steuerung weiterhin eine Lookup-Tabelle zum Speichern von Änderungswerten der Referenzspannung gemäß der Eingangsspannung umfasst.

7. Organische Leuchtanzeigevorrichtung nach einem der vorangegangenen Ansprüche, wobei die Eingangsspannungsterminal an eine Batterie gekoppelt ist.

8. Organische Leuchtanzeigevorrichtung nach einem der vorangegangenen Ansprüche, wobei der Wechselrichter (430) eine Switch-Mode-Schaltkreis umfasst.

9. Organische Leuchtanzeigevorrichtung nach einem der vorangegangenen Ansprüche, wobei die zweite Stromversorgungsspannung (ELVSS) niedriger ist als eine Massespannung.

## Revendications

1. Dispositif d'affichage électroluminescent organique comprenant :
une unité d'affichage (100) adaptée pour afficher une image correspondant à un signal de données, un signal de balayage, une première tension d'alimentation (ELVDD) et une deuxième tension d'alimentation (ELVSS) ;
un circuit d'attaque (200) de données adapté pour générer et délivrer en sortie le signal de données à l'unité d'affichage (100) ;
un circuit d'attaque (300) de balayage adapté pour générer et délivrer en sortie le signal de balayage à l'unité d'affichage (100) ; et
un convertisseur continu-continu (400) adapté pour générer la première tension d'alimentation (ELVDD) et la deuxième tension d'alimentation (ELVSS), à partir d'une tension d'entrée présente à une borne de tension d'entrée, le convertisseur continu-continu (400) comprenant :
un survolteur (420) adapté pour amplifier la tension d'entrée afin de générer la première tension d'alimentation ; et
un onduleur (430) adapté pour inverser la tension d'entrée afin de générer la deuxième tension d'alimentation (ELVSS), **caractérisé en ce que** le convertisseur continu-continu (400) comprend en outre un détecteur de tension (410) adapté pour détecter un niveau de tension de la tension d'entrée, et **en ce que** l'onduleur (430) est adapté pour commander un niveau de tension de la deuxième tension d'alimentation (ELVSS) selon le niveau de tension de la tension d'entrée détecté par le détecteur de tension (410), où l'onduleur (430) est adapté pour augmenter le niveau de tension de la deuxième tension d'alimentation (ELVSS) lorsque le niveau de tension de la tension d'entrée diminue.

2. Dispositif d'affichage électroluminescent organique tel que revendiqué dans la revendication 1, dans lequel le survolteur (420) comprend :
une première bobine (L1) ayant une première borne couplée à une borne d'entrée pour la tension d'entrée ; et
un premier commutateur (T1) connecté entre une deuxième borne de la première bobine (L1) et une borne de sortie pour la première tension d'alimentation (ELVDD) et adapté pour réaliser une opération de commutation pour permettre à la tension d'entrée de faire circuler ou de bloquer un courant à travers la première bobine (L1) de sorte que la première tension d'alimentation (ELVDD) soit générée dans la première bobine (L1).

3. Dispositif d'affichage électroluminescent organique tel que revendiqué dans la revendication 2, dans lequel l'onduleur (430) comprend :
un deuxième commutateur (T2) connecté entre la deuxième borne de la première bobine (L1) et
une deuxième bobine (L2) ;
le deuxième commutateur (T2) étant adapté pour transmettre ou bloquer la première tension d'alimentation (ELVDD) ; et
un diviseur de tension (440) comprenant des première et deuxième résistances (R1, R2) et adapté pour diviser une tension entre une tension de référence et une tension générée par la deuxième bobine (L2).

4. Dispositif d'affichage électroluminescent organique tel que revendiqué dans la revendication 3, comprenant en outre :
une unité de commande à modulation d'impulsion en largeur (PWM) couplée au premier commutateur (T1) et au deuxième commutateur (T2) et adaptée pour commander la commutation du premier commutateur (T1) et du deuxième commutateur (T2).

5. Dispositif d'affichage électroluminescent organique tel que revendiqué dans la revendication 4, dans lequel l'unité de commande PWM a une entrée pour une tension de retour couplée entre les première et deuxième résistances (R1, R2) et est adaptée pour commander une largueur d'impulsions d'un signal de sortie de l'unité de commande PWM suivant la tension de retour.

6. Dispositif d'affichage électroluminescent organique tel que revendiqué dans l'une des revendications 4 et 5, dans lequel l'unité de commande PWM comprend en outre une table de conversion destinée à stocker des valeurs de variation de la tension de référence suivant la tension d'entrée.

7. Dispositif d'affichage électroluminescent organique tel que revendiqué dans l'une des revendications précédentes, dans lequel la borne de la tension d'entrée est connectée à une batterie.

8. Dispositif d'affichage électroluminescent organique tel que revendiqué dans l'une des revendications précédentes, dans lequel l'onduleur (430) comprend un circuit à découpage.

9. Dispositif d'affichage électroluminescent organique tel que revendiqué dans l'une des revendications précédentes, dans lequel la deuxième tension d'alimentation (ELVSS) est inférieure à une tension de masse.
